# EUROPÄISCHE PATENTSCHRIFT

(11) **EP 3 924 211 B1**
(45) Veröffentlichungstag und Bekanntmachung des Hinweises auf die Patenterteilung: **10.07.2024**
(21) Anmeldenummer: 20704800.0
(22) Anmeldetag: 05.02.2020
(51) Int. Cl.: B60L 50/00, B60W 20/12, B60W 30/14, B60W 50/14, B60W 40/10, B60R 9/00, B60H 1/00, B60L 15/20

(54) **VERFAHREN ZUR UNTERSTÜTZUNG EINES FAHRERS EINES FAHRZEUGS MIT EINEM ELEKTRISCHEN ANTRIEB**
METHOD FOR ASSISTING A DRIVER OF A VEHICLE HAVING AN ELECTRIC DRIVE
PROCÉDÉ D'ASSISTANCE À UN CONDUCTEUR D'UN VÉHICULE COMPRENANT UN ENTRAÎNEMENT ÉLECTRIQUE

(30) Priorität: 14.02.2019 DE 102019201955
(43) Veröffentlichungstag der Anmeldung: 22.12.2021
(73) Patentinhaber: Robert Bosch GmbH, 70442 Stuttgart (DE)
(72) Erfinder: STRATZ, Florian, 71282 Hemmingen (DE); MATSCHKE, Thomas, 74321 Bietigheim-Bissingen (DE); GOLL, Ralph, 71282 Hemmingen (DE)
(86) Internationale Anmeldenummer: PCT/EP2020/052821
(87) Internationale Veröffentlichungsnummer: WO 2020/164984

(56) Entgegenhaltungen:
- EP-A2- 2 921 366
- DE-A1- 102011 007 152
- DE-A1- 102013 211 871
- US-A1- 2017 282 744

## Beschreibung

Die Erfindung betrifft ein Verfahren zur Unterstützung eines Fahrers eines Fahrzeugs mit elektrischem Antrieb, wobei der Verbrauch elektrischer Energie des Fahrzeugs von Einflussgrößen bestimmt wird und wobei sich die Einflussgrößen auf Faktoren beziehen, die vom Fahrer des Fahrzeugs beeinflussbar sind. Des Weiteren betrifft die Erfindung ein Fahrerassistenzsystem, welches eingerichtet ist, das Verfahren auszuführen.

### Stand der Technik

Elektrofahrzeuge sowie Hybridfahrzeuge umfassen einen elektrischen Energiespeicher, beispielsweise eine Batterie, welcher Energie zum Betreiben eines elektrischen Antriebs bereitstellt. Dadurch bestimmt sich eine Reichweite des Elektrofahrzeugs beziehungsweise eine elektrisch zurücklegbare Reichweite eines Hybridfahrzeugs aus der verbleibenden Kapazität des Energiespeichers sowie dem zukünftigen Energiebedarf des Fahrzeugs. Bei bekannten Energiespeichern, insbesondere bei Batterien, ist die Speicherkapazität begrenzt, so dass Elektrofahrzeuge und Hybridfahrzeuge nur eine begrenzte Reichweite aufweisen, die diese unter Verwendung des elektrischen Antriebs zurücklegen können. Dies ist problematisch, da eine sich daraus ergebende "Reichweitenangst" eine wesentliche Barriere für die Akzeptanz der Elektromobilität darstellt.

Die Druckschrift DE 10 2013 211 871 A1 beschreibt ein Verfahren und eine Vorrichtung zum Betrieb eines Fahrzeugs mit Elektroantrieb. Hierbei wird ein Fahrtziel ausgewählt und eine Funktion und somit eine Leistungsaufnahme mindestens einer Fahrzeugkomponente eingestellt sowie eine Fahrstrecke und eine Fahrdistanz ermittelt. Eine Reichweite des Fahrzeugs sowie ein Reichweitenpuffer wird ermittelt und eine Prioritätsliste erstellt, die beschreibt, welche Änderung des Zustands der mindestens einen Fahrzeugkomponente bevorzugt durchzuführen ist, falls die berechnete Reichweite geringer als die berechnete Fahrdistanz ist.

Aus dem Stand der Technik ist bekannt, eine Restreichweite aus dem Stromverbrauch der Vergangenheit und der aktuellen Kapazität des Energiespeichers hochzurechnen. Aus DE 10 2018 104 999 A1 ist ein Verbrauchsmanagement bekannt, um die Reichweite eines elektrischen Fahrzeugs zu erweitern. In einer Variante ist vorgesehen, eine Ziel-Reichweitenvergrößerung vorzugeben und daraus Kompromisse für die Steuerung zu bestimmen, wie beispielsweise eine reduzierte Betriebsgeschwindigkeit oder eine Reduktion von zusätzlichen Verbrauchern. Anschließend werden die Fahrzeugsysteme gemäß dieser Kompromisse betrieben, um die geforderte Reichweite zu erzielen. In einer zweiten Variante des Verfahrens werden, während das Fahrzeug in Bewegung ist, unter Berücksichtigung von zuvor bestimmten Kompromissen mehrere reduzierte Leistungsniveaus berechnet, welche durch einen Fahrer des Fahrzeugs akzeptiert werden können. Bei Akzeptierung durch den Nutzer betreibt die Steuerung den Antrieb dann gemäß den Kompromissen. Bei einer dritten Variante des Fahrens wählt der Benutzer Attribute für einen reduzierten Modus bereits vorab aus, wie beispielsweise Heizung, Kühlung, Beschleunigung und Höchstgeschwindigkeit. Die Steuerung kann dann für jeden Modus eine Reichweite ausgeben.

Nachteilig am Stand der Technik ist, dass für den Fahrer nicht direkt ersichtlich ist, welche Auswirkungen die von ihm tatsächlichen beeinflussbaren Größen wie eine Geschwindigkeit des Fahrzeugs, die Heizung, Klimatisierung, das Öffnen oder Schließen von Fenstern sowie das Betreiben weiterer Verbraucher auf die elektrische Reichweite hat. Zur Verbesserung der Akzeptanz von elektrisch angetriebenen Fahrzeugen und zum Abbau der "Reichweitenangst" wäre es hingegen sinnvoll, dem Fahrer die Konsequenzen der von ihm bestimmbaren Einflussgrößen auf die Reichweite direkt aufzuzeigen.

### Offenbarung der Erfindung

Es wird ein Verfahren zur Unterstützung eines Fahrers eines Fahrzeugs mit einem elektrischen Antrieb vorgeschlagen, bei dem eine Liste von vorgegebenen Einflussgrößen zum Verbrauch elektrischer Energie des Fahrzeugs erstellt wird und mit einer Ausgabevorrichtung ausgegeben wird. Die Einflussgrößen beziehen sich dabei auf Faktoren, die vom Fahrer des Fahrzeugs beeinflussbar sind. Das Verfahren umfasst in einem ersten Schritt a) das Abrufen von Kennfeldern, welche einen Zusammenhang zwischen einem Energieverbrauch und der jeweiligen Einflussgröße angeben. In einem weiteren Schritt b) des Verfahrens werden mögliche Optimierungen des Energieverbrauchs durch Ändern der jeweiligen Einflussgröße bestimmt. In einem nachfolgenden Schritt c) des Verfahrens werden Energieeinsparungen berechnet, welche bei Ausführen der möglichen Optimierungen der jeweiligen Einflussgrößen möglich sind, wobei dazu die abgerufenen Kennfelder verwendet werden. In einem nachfolgenden Schritt) des Verfahrens erfolgt ein Sortieren der Einflussgrößen in der Liste. Dabei werden die Einflussgrößen bevorzugt nach der Größe der jeweils möglichen Energieeinsparung sortiert. Beispielsweise werden Einflussgrößen mit höherer Energieeinsparung zuerst genannt.

Das Verfahren ist auf jede Art von elektrischen Fahrzeugen anwendbar. Bei einem vollelektrischen Fahrzeug erhält der Fahrer entsprechend Empfehlungen, wie er die insgesamt mögliche Reichweite seines Fahrzeugs optimieren kann. Bei einem Hybridfahrzeug oder Plugin-Hybridfahrzeug kann der Fahrer insbesondere Empfehlungen dahingehend erhalten, wie er die allein unter Verwendung des elektrischen Antriebs zurücklegbare Reichweite seines Fahrzeugs optimieren kann.

Die Schritte a), b) und c) des Verfahrens werden bevorzugt für jede der Einflussgrößen durchlaufen. Dabei ist es denkbar, dass die Menge an Einflussgrößen, welche in der Liste aufgeführt sind, fest vorgegeben ist, oder vorab über eine Auswahl durch den Fahrer bestimmt wird.

Die Einflussgrößen sind dabei jeweils auf Faktoren bezogen, welche durch den Fahrer des Fahrzeugs beeinflussbar sind. Die Einflussgrößen umfassen beispielsweise eine vorgegebene Geschwindigkeit, beispielsweise durch Vorgabe an einem Tempomat, den Fahrstil, also ob der Fahrer sportlich oder ökonomisch fährt, die Einstellung der Heizung, die Einstellung einer Klimaanlage, die Wahl der Bereifung des Fahrzeugs, das Anbringen oder Entfernen von Zubehör wie Dachgepäckträger oder Heckgepäckträger, den eingestellten Reifendruck, die Verwendung weiterer elektrischer Verbraucher wie beispielweise eines Infotainment-Systems, einer Sitzheizung oder einer Scheibenheizung, sowie den Öffnungszustand von Fenstern oder eines Schiebedachs.

Die im Schritt a) des Verfahrens abgerufenen Kennfelder geben dabei für die einzelnen Zustände oder Werte, die eine Einflussgröße annehmen kann, ein Zusammenhang mit dem Energieverbrauch an. Beispielsweise kann das Kennfeld für den Parameter Geschwindigkeit den durchschnittlichen Energieverbrauch des Fahrzeugs bei verschiedenen Geschwindigkeiten angeben. Im Fall von zusätzlichen elektrischen Verbrauchern wie beispielsweise einer Scheibenheizung kann das entsprechende Kennfeld den Energieverbrauch bei aktivierter Scheibenheizung sowie bei deaktivierter Scheibenheizung angeben. Des Weiteren können die Kennfelder mehrdimensional ausgestaltet sein, beispielsweise wenn der Energieverbrauch einer Einflussgröße von weiteren Parametern wie beispielsweise den aktuellen Umgebungsbedingungen abhängig ist. So kann beispielsweise für eine Heizung angegeben sein, wieviel Energie zum Aufrechterhalten einer bestimmten Innenraumtemperatur für verschiedene Außentemperaturen erforderlich ist.

Im Schritt B) des Verfahrens werden mögliche Optimierungen des Energieverbrauchs für die einzelnen Einflussgrößen bestimmt. Ist bei einer Einflussgröße nur einer von zwei möglichen Zuständen einnehmbar, beispielsweise kann ein Dachgepäckträger vorhanden sein oder entfernt sein, so wird dabei der jeweils günstigere Zustand als mögliche Optimierung bestimmt. Sind verschiedene diskrete Zustände möglich, beispielsweise Stufen für eine Sitzheizung oder Scheibenheizung, so können entsprechende Optimierungen jeweils für die möglichen Zustände bestimmt werden, die diese Einflussgröße einnehmen kann. Kann eine Einflussgröße kontinuierlich variiert werden, beispielsweise die Geschwindigkeit oder eine stufenlos einstellbare Heizung, so können in dem Schritt b) als mögliche Optimierungen Reduzierungen in mehreren Schritten wie beispielsweise Reduzierung um 10 % oder in bestimmten Vielfachen der jeweiligen Einheit der Einflussgröße bestimmt werden. So kann beispielsweise betreffend die Geschwindigkeit die Optimierung zur Reduzierung der Geschwindigkeit in Schritten von jeweils 10 km/h angegeben werden und betreffend die Heizung bei Absenkung der Temperatur in Schritten von jeweils 1 °C. Bevorzugt werden die möglichen Optimierungen unter Berücksichtigung beziehungsweise ausgehend vom aktuellen Zustand der jeweiligen Einflussgröße bestimmt. Dabei kann vorgesehen sein, den aktuellen Zustand einer Einflussgröße automatisch, z.B. über Sensoren, zu erfassen.

Im Schritt c) des Verfahrens werden für die zuvor bestimmten Optimierungsmöglichkeiten der einzelnen Einflussgrößen unter Verwendung der Kennfelder mögliche Energieeinsparung bestimmt. Wurden für eine Einflussgröße mehrere mögliche Optimierungen bestimmt, so wird bevorzugt in Schritt c) die mögliche Energieeinsparung für alle bestimmten Optimierungsmöglichkeiten berechnet. Im einfachsten Fall kann die Berechnung durch einfaches Nachschlagen des Energieverbrauchs einer Einflussgröße für den jeweiligen durch die Optimierungen bestimmten Zustand aus dem Kennfeld abgelesen werden.

Im Schritt d) des Verfahrens erfolgt das Sortieren der Einflussgrößen in der Liste. Sind für die jeweiligen Einflussgrößen mehrere Optimierungen möglich, werden dabei bevorzugt auch mehrere Optimierungen berücksichtigt, so dass gegebenenfalls eine einzelne Einflussgröße auch mehrfach in der Liste erscheinen kann. Alternativ ist es möglich, für jede der Einflussgrößen eine der möglichen Optimierungen auszuwählen und für die Sortierung der Liste zu verwenden. Die ausgewählte Optimierung kann dabei beispielsweise als die kleinste Änderung der jeweiligen Einflussgröße ausgewählt werden oder es kann jeweils die Optimierung bestimmt werden, welche die größte Energieeinsparung ermöglicht.

Nach dem Sortieren der Einflussgrößen gemäß Schritt d) erfolgt die Ausgabe der Liste unter Verwendung der Ausgabevorrichtung. Dabei kann insbesondere vorgesehen sein, dass jeweils zusammen mit der Nennung einer Einflussgröße in der Liste auch die erzielbare Energieeinsparung zusammen mit dem jeweiligen Eintrag für die Einflussgröße angezeigt beziehungsweise ausgegeben wird.

Bei einer nicht zur Erfindung gehörenden Variante des Verfahrens wird aus der möglichen Energieeinsparung für jede Einflussgröße bestimmt, wieviel Reichweite durch Ausführung der jeweiligen Optimierung der Einflussgröße gewonnen werden kann und die bestimmte gewinnbare Reichweite wird jeweils zusammen mit der Liste ausgegeben. Eine Ausgabe der gewinnbaren Reichweite ist vorteilhaft, da ein Reichweitengewinn für einen Fahrer einfacher verständlich ist, als die mögliche Energieeinsparung.

Diese nicht zur Erfindung gehörende Variante des Verfahrens stellt einen Reichweitenmodus dar, welcher dem Fahrer aufzeigt, durch welche der beeinflussbaren Einflussgrößen sich die Reichweite des Fahrzeugs erhöhen lässt, wobei der Fahrer Empfehlungen erhält, welche bevorzugt nach der Größe des Optimierungspotentials beziehungsweise nach der Größe der möglichen Reichweitenerhöhung sortiert sind.

Bei dem Verfahren wird durch den Fahrer ein Zielort vorgegeben und es wird die Vorgabe gemacht, dass die Entfernung zum Zielort durch das Fahrzeug ohne Nachladen eines Energiespeichers des Fahrzeugs zurückgelegt werden muss, wobei unter Berücksichtigung der Einflussgrößen und der Kennfelder eine Geschwindigkeitsvorgabe bestimmt wird, welche ein Erreichen des Zielorts ohne Nachladen ermöglicht und wobei diese Geschwindigkeitsvorgabe zusammen mit der Liste ausgegeben wird.

Das Verfahren stellt einen Zielmodus dar, der den Fahrer eines Fahrzeugs dabei unterstützt, ein gewähltes Ziel so schnell wie möglich ohne eine Ladepause zu erreichen.

Ferner ist bei dem Verfahren vorgesehen, dass aus der möglichen Energieeinsparung für jede Einflussgröße bestimmt wird, wie stark die Geschwindigkeitsvorgabe durch Ausführung der jeweiligen Optimierung der Einflussgröße erhöht werden kann und die bestimmte Erhöhung wird jeweils zusammen mit der Liste ausgegeben.

In einer weiteren Ausführungsform des Zielmodus ist es vorgesehen, dass die Geschwindigkeitsvorgabe an einen Tempomat des Fahrzeugs übermittelt wird. Wird durch den Fahrer eine Energieeinsparung vorgenommen durch Ausführung einer der möglichen Optimierungen einer der Einflussgrößen, so wird die Geschwindigkeitsvorgabe entsprechend aktualisiert und an den Tempomaten übermittelt.

Bevorzugt sind die Einflussgrößen ausgewählt aus den Luftwiderstand des Fahrzeugs beeinflussende Parameter, den Rollwiderstand des Fahrzeugs beeinflussende Parameter, der Geschwindigkeit des Fahrzeugs, den Fahrstil des Fahrers, Parameter betreffend Klimatisierung und/oder Heizung des Fahrzeugs, Parameter betreffend den Zustand weiterer elektrischer Verbraucher des Fahrzeugs und Kombinationen mehrerer dieser Parameter. Die weiteren elektrischen Verbraucher umfassen beispielsweise ein Infotainmentsystem.

Die den Luftwiderstand des Fahrzeugs beeinflussenden Parameter sind insbesondere ausgewählt aus dem Öffnungszustand von Fahrzeugfenstern, dem Öffnungszustand eines Schiebedachs, dem Vorhandensein eines Dachgepäckträgers und/oder eines Heckgepäckträgers und Kombinationen mehrerer dieser Parameter. Dabei kann insbesondere vorgesehen sein, dass diese Parameter über entsprechende Sensoren durch das Verfahren automatisiert abgefragt werden. Beispielsweise kann über entsprechende Sensoren der Öffnungszustand eines Fensters oder eines Schiebedachs bestimmt werden oder es kann über einen Sensor das Vorhandensein eines Heckgepäckträgers oder Dachgepäckträgers festgestellt werden.

Durch das Öffnen von Fahrzeugfenstern oder eines Schiebedachs wird der Luftwiderstand des Fahrzeugs ebenso beeinflusst wie durch das Vorhandensein von Zubehör wie einem Dachgepäckträger oder einem Heckgepäckträger. Die durch Realisierung eines günstigeren Zustands beispielsweise durch Schließen eines Fensters oder Entfernen eines Dachgepäckträgers erzielbare Energieeinsparung ist dabei insbesondere auch von der momentanen Fahrzeuggeschwindigkeit abhängig, so dass bevorzugt durch das Vorsehen einer entsprechenden Dimension im Kennfeld eine Berücksichtigung erfolgt.

Bevorzugt sind die den Rollwiderstand des Fahrzeugs beeinflussenden Parameter ausgewählt aus der Art der Bereifung und/oder dem Luftdruck der Reifen des Fahrzeugs. Bevorzugt werden diese Parameter im Rahmen des Verfahrens automatisiert bestimmt. Dabei kann der Luftdruck über einen Reifendrucksensor erfasst werden und die Art der Bereifung kann beispielsweise durch Auslesen eines Identifikationscodes des Reifendrucksensors bestimmt werden.

Bevorzugt sind die Parameter betreffend die Klimatisierung und/oder Heizung des Fahrzeugs ausgewählt aus der eingestellten Solltemperatur für Heizung und/oder Klimatisierung, dem Betriebszustand einer Sitzheizung, dem Betriebszustand einer Scheibenheizung und Kombinationen mehrerer dieser Parameter. Diese Parameter werden bevorzugt durch Kommunikation mit den entsprechenden Bedienelementen des Fahrzeugs automatisiert abgefragt. Des Weiteren wird bevorzugt, über ein Thermometer die Umgebungstemperatur bestimmt, da für das Klimatisieren oder Heizen eines Fahrzeugs die momentane Außentemperatur relevant für das Bestimmen des Energieverbrauchs ist. Bevorzugt erfolgt zudem durch das Vorsehen einer entsprechenden Dimension im Kennfeld eine Berücksichtigung der Außentemperatur.

Parameter wie beispielsweise die Geschwindigkeit des Fahrzeugs oder der Fahrstil des Fahrers werden im Rahmen des Verfahrens bevorzugt automatisch über entsprechende Sensoren erfasst. Dabei kann beispielsweise der Fahrstil des Fahrers durch Auswerten von Sensoren, welche die Längs- und Querbeschleunigung des Fahrzeugs erfassen, bestimmt werden. Bei starken Beschleunigungen wird auf einen sportlichen Fahrstil geschlossen, welche einen höheren Energieverbrauch bedingt, und bei geringeren Beschleunigungen wird auf einen ökonomischen Fahrstil geschlossen.

Bei Anwendung des Verfahrens wird eine Liste erstellt, welche bevorzugt von großer nach geringer Auswirkung sortiert wird. In der nicht zur Erfindung gehörenden Variante kann eine derartige Liste folgende Größen und deren Auswirkungen auflisten:
- Geschwindigkeit Tempomat von 100 km/h auf 90km/h bewirkt -3 kW und ergibt Reichweitenerhöhung um 22 km,
- Fahrstil von sportlich auf ökonomisch bewirkt -2 kW und ergibt Reichweitenerhöhung um 15 km,
- Heizung von aktuell 22° auf 18° bewirkt -1,5 kW und ergibt Reichweitenerhöhung um 11 km,
- Sommerreifen an Stelle von Winterreifen nutzen bewirkt -1,5 kW und ergibt Reichweitenerhöhung um 11 km,
- Klimaanlage von aktuell 20° auf 23° bewirkt -1 kW und ergibt Reichweitenerhöhung um 7 km,
- Dachgepäckträger entfernen bewirkt -1 kW und ergibt Reichweitenerhöhung um 7 km
- Reifendruck um 0,5 Bar erhöhen bewirkt -1 kW und ergibt Reichweitenerhöhung um 7 km,
- Schiebedach schließen (Fahrwiderstand reduzieren) bewirkt -1 kW und ergibt Reichweitenerhöhung um 4 km,
- Infotainment abschalten bewirkt -0,5 kW und ergibt Reichweitenerhöhung um 4 km,
- Sitzheizung abschalten bewirkt -0,5 kW und ergibt Reichweitenerhöhung um 4 km,
- Scheibenheizung abschalten bewirkt -0,5 kW und ergibt Reichweitenerhöhung um 4 km,
- Fenster schließen (Fahrwiderstand reduzieren) bewirkt -0,5 kW und ergibt Reichweitenerhöhung um 4 km.

Erfindungsgemäß werden Empfehlungen erstellt, welche eine Erhöhung der Geschwindigkeit erlauben, wobei das Ziel dennoch ohne Ladepause erreicht werden kann. Beispielweise kann die Liste die Empfehlung beinhalten, die Heizung komplett auszuschalten, wodurch eine Geschwindigkeitserhöhung für den Tempomat von 95 km/ auf 100 km/h ermöglicht wird.

Die in diesen Beispielen genannten Einflussgrößen, möglichen Optimierungen und deren Auswirkungen auf Energieverbrauch und Reichweite stellen jeweils nur ein mögliches Beispiel dar. Insbesondere die erzielbaren Auswirkungen variieren je nach Fahrzeug.

Bevorzugt werden die Kennfelder von einer fahrzeugexternen Einrichtung oder aus einem Speicher eines dem Fahrzeug zugeordneten Steuergeräts abgerufen.

Bei der fahrzeugexternen Einrichtung kann es sich insbesondere um einen Server oder einen Cloud-Server handeln, welcher über ein Kommunikationsnetzwerk wie eine Mobilfunkverbindung oder das Internet erreichbar ist. Das Fahrzeug kann dann insbesondere Mittel enthalten, um drahtlos mit dieser fahrzeugexternen Einrichtung zu kommunizieren.

Bei dem Verfahren ist bevorzugt vorgesehen, dass nach Ausführung einer Optimierung für eine Einflussgröße die tatsächliche Energieersparung bestimmt wird und an die fahrzeugexterne Einrichtung übermittelt wird oder im Steuergerät gespeichert wird, wobei eine Aktualisierung der Kennfelder für diese Einflussgröße entsprechend der tatsächlichen Energieeinsparung durchgeführt wird. Dies ermöglicht es, Alterungseffekte an Komponenten des Fahrzeugs wie beispielsweise dem Motor, der Heizung, dem Klimakompressor, der Reifen usw. bezüglich des Energieverbrauchs anzulernen und bei der Sortierung der Liste korrekt zu berücksichtigen.

Die in der fahrzeugexternen Einrichtung beziehungsweise in einem Speicher des dem Fahrzeug zugeordneten Steuergeräts hinterlegten Kennfelder für die einzelnen Einflussgrößen sind insbesondere mehrdimensionale Kennfelder, um den Zusammenhang des Energieverbrauchs für alle Betriebsbedingungen und gegebenenfalls für verschiedene Umgebungsbedingungen wie Fahrzeuggeschwindigkeit oder Außentemperatur zu berücksichtigen.

Beispielsweise im Fall der Fahrzeugtemperatur wird ein Gradient ΔP/ΔT in einem Kennfeld hinterlegt. Dabei ist ΔP eine Differenz beim Energieverbrauch und ΔT eine Differenz bei der Temperatur. Aus diesem Gradienten kann berechnet werden, wieviel elektrische Leistung eingespart wird, wenn die Temperatur reduziert wird. Beträgt die Außentemperatur beispielsweise 0 °C und wird die Temperatur von 20 °C auf zum Beispiel 18 °C abgesenkt, so beträgt bei einem Gradienten von 0,25 kW pro °C die einzusparende Leistung 0,5 kW.

Bei Einflussgrößen betreffend den Luftwiderstand des Fahrzeugs ist zu berücksichtigen, dass der Luftwiderstand quadratisch mit der Geschwindigkeit zunimmt und von fahrzeugindividuellen Kenngrößen wie dem CW-Wert und der Stirnfläche abhängig ist. In einem Kennfeld wird daher bevorzugt hinterlegt, bei welcher Geschwindigkeit sich welcher Luftwiderstand ergibt, und es wird daraus abgeleitet, welche Leistung zur Überwindung des Luftwiderstands notwendig ist. Werden beispielsweise bei einer Geschwindigkeit von 90 km/h 10 kW Leistung benötigt und bei 100 km/h 13 kW Leistung benötigt, so kann bei einer Reduzierung der Geschwindigkeit von 100 km/h auf 90 km/h eine Leistungsreduzierung von 3 kW erzielt werden.

Der Luftwiderstand des Fahrzeugs ist zudem vom Öffnungszustand der Fenster abhängig. Bei einem offenen Fenster entsteht eine Verwirbelung in Form einer turbulenten Strömung, welche den Luftwiderstandsbeiwert (cw) des Fahrzeugs verändert. Der entsprechende cw-Wert für verschiedene Zustände der Fenster bei verschiedenen Geschwindigkeiten des Fahrzeugs wird bevorzugt in einem Kennfeld hinterlegt. Wird beispielsweise bei 90 km/h und bei geschlossenen Fenstern 10 kW Leistung benötigt und bei vollständig geöffneten Fenstern bei gleicher Geschwindigkeit 10,5 kW benötigt, so ergibt eine Optimierung durch Schließen der Fenster eine Leistungsreduzierung von 0,5 kW.

Ein weiterer Aspekt der Erfindung ist es, ein Fahrerassistenzsystem zur Unterstützung eines Fahrers eines Fahrzeugs mit einem elektrischen Antrieb bereitzustellen. Das Fahrerassistenzsystem umfasst eine Ausgabevorrichtung zur Ausgabe einer Liste von Einflussgrößen zum Verbrauch elektrischer Energie des Fahrzeugs sowie ein Steuergerät, welches eingerichtet ist, eines der hierin beschriebenen Verfahren auszuführen.

Das Fahrerassistenzsystem ist zur Durchführung der hierin beschriebenen Verfahren ausgestaltet und eingerichtet, so dass im Rahmen der Verfahren beschriebenen Merkmale entsprechend für das Fahrerassistenzsystem gelten und umgekehrt im Zusammenhang mit dem Fahrerassistenzsystem beschriebenen Merkmale für die Verfahren gelten.

Das Steuergerät des Fahrerassistenzsystems ist bevorzugt eingerichtet, mit Sensoren und anderen Assistenzsystemen des Fahrzeugs zu kommunizieren, um Informationen über den momentanen Zustand von den Einflussgrößen zu erhalten.

Die Ausgabevorrichtung ist bevorzugt als ein Bildschirm ausgestaltet. Alternativ oder zusätzlich kann die Ausgabevorrichtung auch als ein Lautsprecher ausgestaltet sein, welcher die Liste beispielsweise über eine Sprachausgabe akustisch ausgibt. Ebenso ist es alternativ oder zusätzlich möglich, die Ausgabevorrichtung als eine Verbindung zu einem Smart-Device des Fahrers auszugestalten, wie beispielsweise ein Smart-Phone oder ein Tablet. In diesem Fall wird beispielsweise ein Bildschirm oder ein Lautsprecher des Smart-Device für die Ausgabe der Liste verwendet.

### Vorteile der Erfindung

Durch das vorgeschlagene Verfahren wird die Akzeptanz von elektrisch angetriebenen Fahrzeugen erheblich gesteigert, da die "Reichweitenangst" durch eine bessere Information des Fahrers reduziert wird. Zu dieser Akzeptanzsteigerung trägt weiterhin bei, dass mögliche Optimierungen nicht automatisch umgesetzt werden, so dass insbesondere das Elektrofahrzeug nicht dauerhaft in einem reduzierten "Eco-Modus" betrieben wird, bei dem die Fahrleistung herabgesetzt wird. Bei dem vorgeschlagenen Verfahren hat der Fahrer jederzeit die Entscheidungsfreiheit, welche der Einflussfaktoren er beeinflussen möchte, während bei einem üblichen "Eco-Modus" ein Bündel von Maßnahmen gleichzeitig umgesetzt werden, wobei beispielsweise die Motorleistung reduziert wird, die Geschwindigkeit begrenzt wird und die Verwendung der Klimaanlage verringert wird.

Vorteilhafterweise werden die beeinflussbaren Einflussgrößen in der Reihenfolge ihres Einsparpotentials ausgegeben, so dass der Fahrer eine informierte Entscheidung treffen kann. In vorteilhaften Varianten des Verfahrens kann der Fahrer diese Informationen nutzen, um bei Bedarf durch Ergreifen entsprechender Maßnahmen die Reichweite zu erhöhen und alternativ kann der Fahrer die möglichen Energieeinsparungen nutzen, um die höchstmögliche Geschwindigkeit zu wählen, die ohne Ladepause ein Erreichen eines bestimmten Ziels ermöglicht, und so seine Reisezeit verkürzen. Kurze Beschreibung der Zeichnungen

Ausführungsformen der Erfindung werden anhand der Zeichnung und der nachfolgenden Beschreibung näher erläutert.

Die einzige Figur zeigt ein Fahrzeug mit einem Fahrerassistenzsystem.

Die Figur stellt den Gegenstand der Erfindung schematisch dar.

### Ausführungsformen der Erfindung

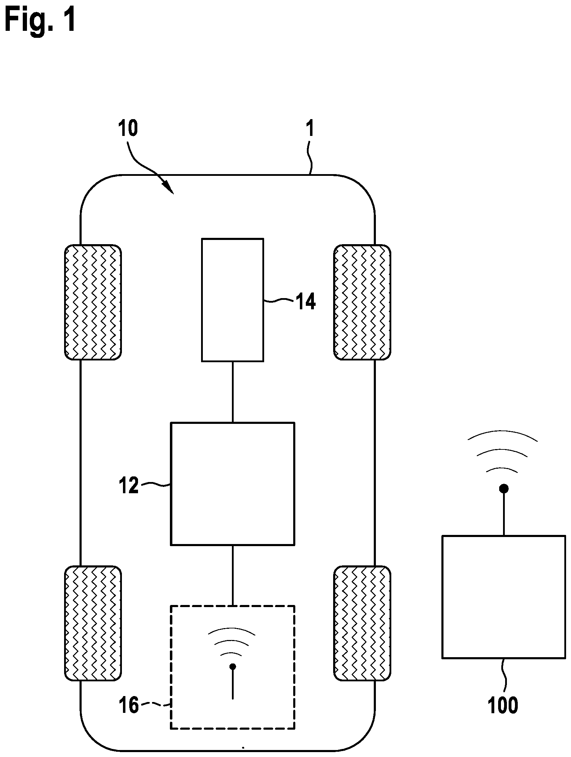

Figur 1 zeigt ein Fahrzeug 1 mit einem Fahrerassistenzsystem 10 zur Unterstützung eines Fahrers eines Fahrzeugs 1. Das Fahrzeug 1 weist einen elektrischen Antrieb auf und ist somit beispielsweise als ein Elektrofahrzeug oder als ein Hybridfahrzeug ausgestaltet.

Das Fahrerassistenzsystem 10 umfasst ein Steuergerät 12 sowie eine Ausgabevorrichtung 14.

Durch das Fahrerassistenzsystem 10 werden für verschiedene durch den Fahrer beeinflussbare Einflussgrößen, welche jeweils den Verbrauch elektrischer Energie des Fahrzeugs 1 beeinflussen, Kennfelder abgerufen, welche einen Zusammenhang zwischen Energieverbrauch und der jeweiligen Einflussgröße angeben. Diese Kennfelder können in einem Speicher des Steuergeräts 12 hinterlegt sein. Alternativ oder zusätzlich hierzu können Mittel zur Kommunikation 16 vorgesehen sein, über die das Fahrerassistenzsystem 10 mit einer fahrzeugexternen Einrichtung 100 kommunizieren kann. Die fahrzeugexterne Einrichtung 100 ist beispielsweise als ein Cloud-Server ausgestaltet und stellt in dieser Ausführungsform dem Fahrerassistenzsystem 10 die Kennfelder zur Verfügung. Im Anschluss bestimmt das Steuergerät 12 des Fahrerassistenzsystems 10 mögliche Optimierungen des Energieverbrauchs bei Ändern der jeweiligen Einflussgröße. Im Anschluss wird berechnet, welche möglichen Energieeinsparungen erzielt werden können, wenn die möglichen Optimierungen der jeweiligen Einflussgröße ausgeführt werden. Dazu verwendet das Steuergerät 12 die abgerufenen Kennfelder. Nach dem Berechnen der möglichen Energieeinsparungen werden die Einflussgrößen sortiert und in Form einer Liste ausgegeben. Dazu wird die Ausgabevorrichtung 14 verwendet. Diese ist beispielsweise als ein Bildschirm ausgestaltet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Unterstützung eines Fahrers eines Fahrzeugs (1) mit einem elektrischen Antrieb, bei dem eine Liste von vorgegebenen Einflussgrößen zum Verbrauch elektrischer Energie des Fahrzeugs (1) erstellt wird und mit einer Ausgabevorrichtung (14) ausgegeben wird, wobei sich die Einflussgrößen auf Faktoren beziehen, die vom Fahrer des Fahrzeugs (1) beeinflussbar sind, wobei das Verfahren folgende Schritte umfasst:
a) Abrufen von Kennfeldern, welche einen Zusammenhang zwischen Energieverbrauch und der jeweiligen Einflussgröße angeben,
b) Bestimmen möglicher Optimierungen des Energieverbrauchs durch Ändern der jeweiligen Einflussgröße,
c) Berechnen möglicher Energieeinsparungen bei Ausführen der möglichen Optimierungen der jeweiligen Einflussgröße unter Verwendung der abgerufenen Kennfelder,
d) Sortieren der Einflussgrößen in der Liste
wobei ein Zielort vorgegeben wird und vorgegeben wird, dass die Entfernung zum Zielort durch das Fahrzeug (1) ohne Nachladen eines Energiespeichers des Fahrzeugs (1) zurückgelegt werden muss, wobei unter Berücksichtigung der Einflussgrößen und der Kennfelder eine Geschwindigkeitsvorgabe bestimmt wird, welche ein Erreichen des Zielorts ohne Nachladen ermöglicht, und diese Geschwindigkeitsvorgabe zusammen mit der Liste ausgegeben wird, **dadurch gekennzeichnet, dass** aus der möglichen Energieeinsparung für jede Einflussgröße bestimmt wird, wie stark die Geschwindigkeitsvorgabe durch Ausführung der jeweiligen Optimierung der Einflussgröße erhöht werden kann und die bestimmte Erhöhung jeweils zusammen mit der Liste ausgegeben wird.

2. Verfahren gemäß Anspruch 1, **dadurch gekennzeichnet, dass** die Geschwindigkeitsvorgabe an einen Tempomat des Fahrzeugs (1) übermittelt wird.

3. Verfahren gemäß einem der Ansprüche 1 bis 2, **dadurch gekennzeichnet, dass** die Einflussgrößen ausgewählt sind aus den Luftwiderstand des Fahrzeugs (1) beeinflussende Parameter, den Rollwiderstand des Fahrzeugs (1) beeinflussende Parameter, dem Fahrstil des Fahrers, Parameter betreffend die Klimatisierung und/oder Heizung des Fahrzeugs (1), Parameter betreffend den Zustand weiterer elektrischer Verbraucher im Fahrzeug (1) und Kombinationen mehrerer dieser Parameter.

4. Verfahren gemäß Anspruch 3, **dadurch gekennzeichnet, dass** die den Luftwiderstand des Fahrzeugs (1) beeinflussenden Parameter ausgewählt sind aus dem Öffnungszustand von Fahrzeugfenstern, dem Öffnungszustand eines Schiebedachs, dem Vorhandensein eines Dachgepäckträgers und/oder eines Heckgepäckträgers und Kombinationen mehrerer dieser Parameter.

5. Verfahren gemäß Anspruch 3 oder 4, **dadurch gekennzeichnet, dass** die den Rollwiderstand des Fahrzeugs (1) beeinflussenden Parameter ausgewählt sind aus der Art der Bereifung und/oder dem Luftdruck der Reifen des Fahrzeugs (1).

6. Verfahren gemäß einem der Ansprüche 3 bis 5, **dadurch gekennzeichnet, dass** die Parameter betreffend die Klimatisierung und/oder Heizung des Fahrzeugs (1) ausgewählt sind aus der eingestellten Solltemperatur für Heizung und/oder Klimatisierung, dem Betriebszustand einer Sitzheizung, dem Betriebszustand einer Scheibenheizung und Kombinationen mehrerer dieser Parameter.

7. Verfahren gemäß einem der Ansprüche 1 bis 6, **dadurch gekennzeichnet, dass** die Kennfelder von einer fahrzeugexternen Einrichtung (100) oder aus einem Speicher eines dem Fahrzeug (1) zugeordneten Steuergerät (12) abgerufen werden.

8. Verfahren gemäß Anspruch 7, **dadurch gekennzeichnet, dass** nach Ausführung einer Optimierung für eine Einflussgröße die tatsächliche Energieeinsparung bestimmt wird und an die fahrzeugexterne Einrichtung (100) übermittelt wird oder im Steuergerät (12) gespeichert wird und eine Aktualisierung der Kennfelder für die Einflussgröße entsprechend der tatsächlichen Energieeinsparung durchgeführt wird.

9. Fahrerassistenzsystem (10) zur Unterstützung eines Fahrers eines Fahrzeugs (1) mit einem elektrischen Antrieb umfassend eine Ausgabevorrichtung (14) zur Ausgabe einer Liste von Einflussgrößen zum Verbrauch elektrischer Energie des Fahrzeugs (1), sowie ein Steuergerät (12), welches eingerichtet ist, das Verfahren nach einem der Ansprüche 1 bis 8 auszuführen.

## Claims

1. Method for assisting a driver of a vehicle (1) having an electric drive, in which a list of predefined influencing variables for the consumption of electrical energy by the vehicle (1) is created and output by an output device (14), wherein the influencing variables relate to factors, which are influenceable by the driver of the vehicle (1), wherein the method includes the following steps:
a) retrieving characteristic maps, which indicate a relationship between energy consumption and the particular influencing variable,
b) determining possible optimizations of the energy consumption by modifying the particular influencing variable,
c) calculating possible energy savings by implementing the possible optimizations of the particular influencing variable by utilizing the retrieved characteristic maps,
d) sorting the influencing variables in the list,
wherein a destination is predefined and it is specified that the distance to the destination must be covered by the vehicle (1) without recharging an energy store of the vehicle (1), wherein, under consideration of the influencing variables and the characteristic maps, a speed specification is determined which enables the destination to be reached without recharging, and this speed specification is output together with the list in each case, **characterized in that**, on the basis of the possible energy savings for each influencing variable, it is determined, by what extent the speed specification can be increased by carrying out the particular optimization of the influencing variable and the determined increase is output together with the list in each case.

2. Method according to Claim 1, **characterized in that** the speed specification is transmitted to a vehicle-speed controller of the vehicle (1).

3. Method according to either of Claims 1 and 2, **characterized in that** the influencing variables are selected from parameters influencing the aerodynamic drag of the vehicle (1), parameters influencing the rolling resistance of the vehicle (1), the driving style of the driver, parameters related to the air conditioning and/or the heating of the vehicle (1), parameters related to the condition of further electrical consumers in the vehicle (1), and combinations of several of these parameters.

4. Method according to Claim 3, **characterized in that** the parameters influencing the aerodynamic drag of the vehicle (1) are selected from the opening condition of vehicle windows, the opening condition of a sun roof, the presence of a roof rack and/or a rear-mounted luggage rack, and combinations of several of these parameters.

5. Method according to Claim 3 or 4, **characterized in that** parameters influencing the rolling resistance of the vehicle (1) are selected from the type of tyres and/or the air pressure of the tyres of the vehicle (1).

6. Method according to one of Claims 3 to 5, **characterized in that** the parameters related to the air conditioning and/or the heating of the vehicle (1) are selected from the set setpoint temperature for heating and/or air conditioning, the operating condition of a seat heating, the operating condition of a window heating, and combinations of several of these parameters.

7. Method according to one of Claims 1 to 6, **characterized in that** the characteristic maps are retrieved from a vehicle-external unit (100) or from a memory of a control unit (12) assigned to the vehicle (1).

8. Method according to Claim 7, **characterized in that**, after the implementation of an optimization for an influencing variable, the actual energy savings are determined and transmitted to the vehicle-external unit (100) or stored in the control unit (12), and an updating of the characteristic maps is carried out for this influencing variable according to the actual energy savings.

9. Driver assistance system (10) for assisting a driver of a vehicle (1) having an electric drive, including an output device (14) for outputting a list of influencing variables for the consumption of electrical energy of the vehicle (1), and a control unit (12), which is configured for carrying out the method according to one of Claims 1 to 8.

## Revendications

1. Procédé d'assistance au conducteur d'un véhicule (1) avec un entraînement électrique, dans lequel une liste de grandeurs d'influence prédéfinies pour la consommation d'énergie électrique du véhicule (1) est établie et est émise au moyen d'un dispositif de sortie (14), les grandeurs d'influence se rapportant à des facteurs qui peuvent être influencés par le conducteur du véhicule (1), le procédé comprenant les étapes suivantes :
a) récupérer des diagrammes caractéristiques qui indiquent une relation entre la consommation d'énergie et la grandeur d'influence respective,
b) déterminer les optimisations possibles de la consommation d'énergie en modifiant la grandeur d'influence respective,
c) calculer les économies d'énergie possibles en effectuant les optimisations possibles de la grandeur d'influence respective en utilisant les diagrammes caractéristiques récupérés,
d) trier les grandeurs d'influence dans la liste
dans lequel un lieu de destination est prédéfini et la distance jusqu'au lieu de destination qui doit être parcourue par le véhicule (1) sans recharge d'un accumulateur d'énergie du véhicule (1) est prédéfinie, une consigne de vitesse étant déterminée en tenant compte des grandeurs d'influence et des diagrammes caractéristiques, qui permet d'atteindre le lieu de destination sans recharge, et cette consigne de vitesse est éditée en même temps que la liste, **caractérisé en ce qu'**à partir de l'économie d'énergie possible pour chaque grandeur d'influence, il est déterminé dans quelle mesure la consigne de vitesse est apte à être augmentée en effectuant l'optimisation respective de la grandeur d'influence et l'augmentation déterminée est éditée respectivement en même temps que la liste.

2. Procédé selon la revendication 1, **caractérisé en ce que** la consigne de vitesse est transmise à un régulateur de vitesse du véhicule (1).

3. Procédé selon l'une des revendications 1 à 2, **caractérisé en ce que** les grandeurs d'influence sont choisies parmi des paramètres influençant la résistance à l'air du véhicule (1), des paramètres influençant la résistance au roulement du véhicule (1), le style de conduite du conducteur, des paramètres concernant la climatisation et/ou le chauffage du véhicule (1), des paramètres concernant l'état d'autres consommateurs électriques dans le véhicule (1) et des combinaisons de plusieurs de ces paramètres.

4. Procédé selon la revendication 3, **caractérisé en ce que** les paramètres influençant la résistance à l'air du véhicule (1) sont choisis parmi l'état d'ouverture des vitres du véhicule, l'état d'ouverture d'un toit ouvrant, la présence d'une galerie de toit et/ou d'un porte-bagages arrière et des combinaisons de plusieurs de ces paramètres.

5. Procédé selon la revendication 3 ou la revendication 4, **caractérisé en ce que** les paramètres influençant la résistance au roulement du véhicule (1) sont choisis parmi le type de pneumatiques et/ou la pression de gonflage des pneumatiques du véhicule (1).

6. Procédé selon l'une des revendications 3 à 5, **caractérisé en ce que** les paramètres relatifs à la climatisation et/ou au chauffage du véhicule (1) sont choisis parmi la température de consigne réglée pour le chauffage et/ou la climatisation, l'état de fonctionnement d'un chauffage de siège, l'état de fonctionnement d'un chauffage de vitre et des combinaisons de plusieurs de ces paramètres.

7. Procédé selon l'une des revendications 1 à 6, **caractérisé en ce que** les diagrammes caractéristiques sont récupérés depuis un dispositif (100) extérieur au véhicule ou dans une mémoire d'un appareil de commande (12) associé au véhicule (1).

8. Procédé selon la revendication 7, **caractérisé en ce qu'**après l'exécution d'une optimisation pour une grandeur d'influence, l'économie d'énergie effective est déterminée et transmise au dispositif (100) extérieur au véhicule ou est mémorisée dans l'appareil de commande (12) et une actualisation des diagrammes caractéristiques pour la grandeur d'influence est effectuée en fonction de l'économie d'énergie effective.

9. Système (10) d'assistance à la conduite pour assister le conducteur d'un véhicule (1) à entraînement électrique, comprenant un dispositif de sortie (14) pour l'émission d'une liste de grandeurs d'influence pour la consommation d'énergie électrique du véhicule (1), ainsi qu'un appareil de commande (12) qui est conçu pour mettre en oeuvre le procédé selon l'une des revendications 1 à 8.
